# NEUE EUROPÄISCHE PATENTSCHRIFT

(11) **EP 1 133 645 B2**
(45) Veröffentlichungstag und Bekanntmachung des Hinweises auf die Entscheidung über den Einspruch: **11.11.2009**
(45) Hinweis auf die Patenterteilung: 13.08.2003
(21) Anmeldenummer: 99953944.8
(22) Anmeldetag: 27.10.1999
(51) Int. Cl.: F16D 23/02, F16D 23/06

(54) **SPANLOS UMGEFORMTER SYNCHRONRING**
SYNCHRONIZING RING WHICH IS SHAPED WITHOUT CUTTING
BAGUE DE SYNCHRONISATION PRODUITE SANS ENLEVEMENT DE MATIERE

(30) Priorität: 23.11.1998 DE 19853856
(43) Veröffentlichungstag der Anmeldung: 19.09.2001
(73) Patentinhaber: Schaeffler KG, 91074 Herzogenaurach (DE)
(72) Erfinder: SCHWUGER, Josef, D-91315 Höchstadt (DE); SINNER, Rudolf, D-91088 Bubenreuth (DE); WALDERT, Hartwig, D-91325 Aisch (DE)
(86) Internationale Anmeldenummer: PCT/EP1999/008119
(87) Internationale Veröffentlichungsnummer: WO 2000/031428

(56) Entgegenhaltungen:
- EP-A- 0 159 080
- EP-A- 0 159 080
- DE-A- 3 225 364
- DE-A- 3 225 364
- DE-A- 3 519 811
- DE-A- 3 712 411
- DE-A- 3 712 411
- DE-A- 19 713 304
- DE-A- 19 718 905
- DE-A- 19 718 905
- DE-B- 1 906 863
- DE-C2- 3 519 810
- US-A- 4 698 889
- US-A- 4 698 889
- DIPL.-ING.M.GIESE ET AL: 'FUNKTIONS-UND KOSTENOPTIMIERTE REIBSYSTEME FÜR EIN-UND MEHRFLÄCHENSYNCHRONISIERUNGEN' VDI BERICHTE NR 1175 Bd. 1175, Seiten 474 - 491

## Beschreibung

### Anwendungsgebiet der Erfindung

Die Erfindung betrifft einen Synchronring einer Synchronisiereinrichtung, gebildet aus einem Ringkörper, einer Verzahnung und mindestens einem Anschlag, wobei
- der Ringkörper aus Blech gefertigt und konisch ausgebildet ist,
- der Ringkörper durch einen ersten Endabschnitt sowie einen zweiten Endabschnitt begrenzt ist und an dem ersten Endabschnitt der größte Konusdurchmesser des konisch ausgebildeten Ringkörpers sowie an dem zweiten Endabschnitt der kleinste Konusdurchmesser des konisch ausgebildeten Ringkörpers ausgebildet ist,
- der Ringkörper an seiner Innenmantelfläche eine Reibfläche aufweist,
- die Verzahnung sich an den ersten Endabschnitt des Ringkörpers anschließt sowie über die Außenmantelfläche des Ringkörpers hervorsteht und
- der Anschlag einstückig mit dem Ringkörper ausgebildet sowie an der Außenmantelfläche des Ringkörpers angeordnet ist.

### Hintergrund der Erfindung

Derartige Synchronringe, auch als äußere Synchronringe bezeichnet, sind in der Regel über eine formschlüssige Verbindung direkt oder indirekt mit dem Synchronkörper einer Synchronisiereinrichtung verbunden. Für diese Verbindung sind am äußeren Synchronring ausgebildete Anschläge vorgesehen. In der Regel gehen diese von den Stirnseiten des Synchronringes aus. Diese Anschläge sind häufig in Form von Lappen ausgebildet. Ihrer Gestaltung, insbesondere ihrer Ausrichtung sind umformtechnisch Grenzen gesetzt. Bei diesen Synchronringen befinden sich die in radiale Richtung nach außen weisenden Elemente wie Verzahnung, Lappen oder axiale Anschläge am Rand mit dem großen Konusdurchmesser. Die Synchronringe werden zumeist aus einer Platine zu Näpfen mit konischer Mantelform gezogen, oder aus vorgestanzten Ringplatinen zu ihrer konischen Form durchgestellt. Der große Konusdurchmesser ist dabei am oberen Rand des Napfes angeordnet, der wiederum mit einem radial nach außen gerichteten Bund versehen ist. Der kleine Konusdurchmesser bildet den Bodenbereich des Napfes. Aus dem Bund werden häufig die Sperrverzahnung und die anderen obengenannten Elemente ausgearbeitet. Aus dem Bodenbereich lassen sich auch Lappen ausstanzen oder formen. Sie können jedoch nur in radiale Richtung nach innen weisen oder axial in Entformungsrichtung ausgerichtet sein, da sie sonst einer problemlosen Entformung im Wege stehen.

Von modernen Synchronisiereinrichtungen wird gefordert, daß sie ein geringes Gewicht besitzen und wenig Bauraum in Anspruch nehmen. Theoretisch wird die Breite einer Synchronringanordnung nur durch die für die Reibleistung erforderliche Breite der Reibflächen bestimmt. Praktisch ist jedoch auch der Platzbedarf für die Elemente zur formschlüssigen Verbindung der Ringe mit ihrer Anschlußkonstruktion, wie die genannten Lappen, zu berücksichtigen. Die axiale Ausdehnung einer Synchronisiereinrichtung wird im wesentlichen durch die Ausführung und Ausrichtung solcher Lappen beeinflußt. Nachteilig auf die Gesamtbreite eines Synchronringes nach dem Stand der Technik wirken sich radial nach innen weisende und insbesondere in axiale Richtung ausgerichtete Lappen aus. Es wird also außer dem erforderlichen Platzbedarf für die Reibfläche ein zusätzlicher Anteil für die Anschläge und deren Eingriff in Elemente der Anschlußkonstruktion beansprucht.

*Dem Fachmann sind an den Synchronringen auch Elemente für die formschlüssige Verbindung der Ringe mit ihrer Anschlusskonstruktion bekannt, die wie in EP 0 159 080 A1 gestaltet sind. Der konisch ausgebildete Synchronring ist in diesem Fall aus einer Formronde durch Prägen hergestellt und weist an der Außenmantelfläche des konischen Ringkörpers radial nach außen gerichtete Vorsprünge auf. Das Material des Grundkörpers ist zur Herstellung dieser Vorsprünge von der innen liegenden sowie konisch verlaufenden Reibfläche aus nach außen spanlos ausgeformt. Jeder der Vorsprünge erstreckt sich von dem Endabschnitt des Synchronringes mit dem kleinsten Konusdurchmesser bis an den Bund am Endabschnitt mit dem größten Konusdurchmesser. Jeweils* zwei *der für die Vorsprünge erzeugten Ausformungen sind in diesem Fall als Führungselemente und somit als Anschläge in Umfangsrichtung für jeweils einen zwischen den Führungselementen formschlüssig in den Synchronring eingreifenden Gleitstein vorgesehen. Von diesen Führungselementen sind am Umfang des Synchronringes z. B. drei Paare verteilt angeordnet. An den Ausformungen ist die Reibfläche innen im Synchronring durch* das nach *außen geformte Material unterbrochen. Die Ausformungen wirken* sich *nachteilig auf die Reibleistung des Synchronringes aus, da die wirksame* Reibfläche *um die durch die Ausformung fehlenden Flächenanteile reduziert ist. Die Synchronringe sind in der Breite und*/*oder dem Durchmesser dementsprechend größer auszulegen. Diese Synchronringe und ihre Umgebungskonstruktion beanspruchen daher nachteilig mehr Bauraum*. Der gattungsbildenden Druckschrift DE 35 19 810 C2 ist ein äußerer Synchronring einer Einfachsynchronisierung zu entnehmen. Bei diesem sind die Anschläge durch ein Stauchen von zunächst vorgesehenen Lappen in axialer Richtung gebildet. Ein derartiger äußerer Synchronring eignet sich nicht für eine Mehrfachsynchronisierung.

Die Form eines äußeren Synchronringes wird weiterhin in DE 35 19 811 C2 beschrieben. Die Breite dieses Ringes wird nur durch die Breite seiner Reibfläche bestimmt. Der Formschluß zur Umgebungskonstruktion erfolgt über Anschläge, die im Bereich des äußeren Zahnkranzes ausgebildet sind. Die Anschläge sind von Lappen gebildet, die durch Biegen von Zungen zur Oberfläche des Ringkörpers gleich gerichtet liegen. Die Lappen gehen von der Stirnseite des Ringes aus, an dem sich der größere Durchmesser des konusförmigen Ringes befindet und weisen mit ihrem freien Ende in Richtung der Stirnseite des Ringes, an der der kleine Durchmesser des Konus ausgebildet ist. Diese Lappen werden während des Fertigungsprozesses, nach dem Ziehen, aus dem Rand des Napfes zusammen mit der Verzahnung ausgestanzt und anschließend gebogen. Weist die Stirnseite mit dem kleinen Konusdurchmesser zum Synchronring, so können formschlüssige Verbindungen mit dem Synchronkörper bei derartigen Synchronringen nur mit höherem Aufwand, zum Beispiel lang ausgebildete Lappen, realisiert werden. Je länger so ein Lappen ist, um so schwieriger wird es, ihn in seiner Lage und Position exakt auszurichten. Der Fertigungsaufwand und somit die Fertigungskosten werden, z. B. durch zusätzliches Kalibrieren, erhöht.

### Zusammenfassung der Erfindung

*Die Aufgabe der Erfindung ist es daher, einen Synchronring zu schaffen, dessen Reibflächen zum Formen von Anschlägen nicht unterbrochen bzw. durch das Ausformen von Anschlägen nicht verkürzt ist, wobei insbesondere der durch den Abstand* zwischen *dem Endabschnitt mit dem kleinsten Konusdurchmesser und dem Endabschnitt mit dem größten Konusdurchmesser des Synchronringes beanspruchte Bauraum so gering wie möglich zu halten ist.*

Diese Aufgabe wird nach dem kennzeichnenden Teil des Anspruches 1 gelöst. Der Anschlag ist an dem Endabschnitt des Ringkörpers mit dem kleinen Konusdurchmesser angeordnet. Die Kontur des Anschlages steht in radialer Richtung über die Kontur der Außenmantelfläche des Ringkörpers hervor. Die Anschläge sind an der Stirnseite des äußeren Synchronringes angeordnet, an der der kleine Durchmesser seines konusförmigen Ringkörpers ausgebildet ist. Im wesentlichen von der Stirnseite ausgehend, stehen diese in radialer Richtung über die Außenkontur des Ringkörpers hervor. Es wird also in axialer Ausdehnung über die Breite des Ringkörpers mit seiner Reibfläche hinaus kein zusätzlicher Platz benötigt. Da die Anschläge schon an der Seite des Synchronringes angeordnet sind, die dem Synchronkörper zugewandt ist, können diese sehr kurz und kompakt gestaltet werden. Sie lassen sich in ihrer Form und Lage sehr genau ausführen. Ihre Fertigung kann in den Umformprozeß des Synchronringes integriert oder nachgestellt werden.

*Jeder* Anschlag *ist* eine radial nach außen gerichtete und von der Stirnseite des Ringkörpers radial abgehende Lasche. Diese Lasche *ist* bei der Fertigung des Synchronringes z. B. aus dem Material des Bodens eines gezogenen Napfes ausgearbeitet, das im Anschluß durchgestellt und radial nach außen weisend abgekantet *ist*. Radial nach außen geformt werden muß das Material auch, wenn die Lasche vor dem Umformen in eine Platine eingebracht wurden und diese Platine zum Synchronring mit konischem Querschnitt durchgestellt wird oder wenn der Synchronring aus einem Rohrquerschnitt ausgearbeitet ist. Denkbar ist auch, daß die Laschen radial nach außen weisend gebördelt sind.

Vergrößerte Anschlags- bzw. Führungsflächen eines Anschlages werden geschaffen, wenn wie in einer weiteren bevorzugten Ausführung der Erfindung beschrieben, die Lasche an ihrem freien Ende eine in Richtung der Verzahnung weisende Abkantung aufweist. Diese Abkantung kann schräg oder rechtwinkelig zur Lasche abgewinkelt sein und weist in Richtung der Verzahnung. Auf diese Weise werden vergrößerte seitliche Anlageflächen des Anschlages für den Kontakt zum Synchronkörper geschaffen, durch die der Betrag der Kontaktpressung zwischen Anschlag und Synchronkörper bei schlagartigem Mitnehmen des Synchronringes durch den Synchronkörper, verringert wird.

Eine vorteilhafte Ausführung gemäß Erfindung sieht vor, daß die von der Verzahnung abgewandten Seiten der Laschen eine axiale Anschlagfläche bilden. Diese axiale Anschlagfläche ist vorzugsweise senkrecht zur Längsmittelachse des Synchronringes ausgerichtet und erstreckt sich vom Innendurchmesser des Ringkörpers bis zur Außenkante der Lasche. Es ist auch denkbar, daß die Anschlagfläche spitz- oder stumpfwinkelig zur Längsmittelachse des Synchronringes ausgerichtet ist.

### Kurze Beschreibung der Zeichnung

Die Erfindung wird nachfolgend anhand von mehreren Ausführungsbeispielen näher erläutert. Es zeigen:
- Figur 1: ein Ausführungsbeispiel eines erfindungsgemäßen äußeren Synchronringes mit in radialer Richtung nach außen abgehenden Laschen,
- Figur 2: einen Längsschnitt durch den Synchronring nach Figur 1 entlang der Linie II, III, IV - II, III, IV,
- Figur 3: einen Längsschnitt durch den Synchronring nach Figur 1 entlang der Linie II, III, IV - II, III, IV, in alternativer Ausgestaltung zu der in Figur 2 gezeigten Schnittansicht,

### Detaillierte Beschreibung der Zeichnung

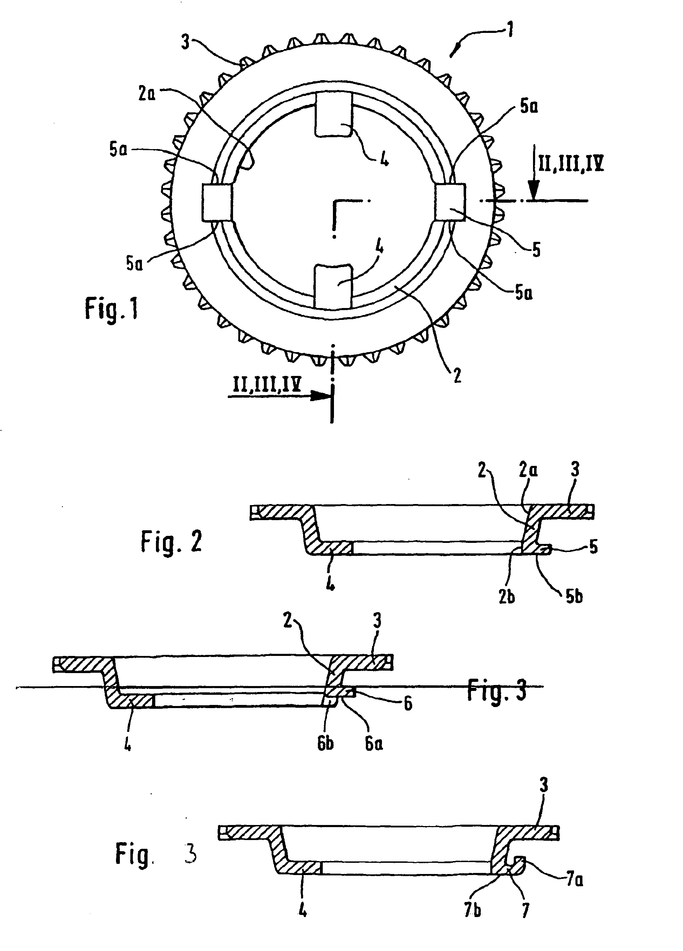

In Figur 1 ist ein Ausführungsbeispiel eines äußeren Synchronringes 1 gemäß Erfindung abgebildet. An dem Ringkörper 2, im Bereich des ersten Endabschnitts 2a des äußeren Synchronringes 1 ist eine, beispielhaft als Zahnkranz, dargestellte Verzahnung 3 ausgebildet. Zwei radial nach innen gerichtete Mitnehmernasen 4 für den formschlüssigen Eingriff, z. B. in einem nicht dargestellten Innensynchronring, gehen vom Ringkörper 2 aus. Vom Randbereich des zweiten Endabschnittes 2b des Ringkörpers 2 weisen zwei Laschen 5 in radialer Richtung nach außen und bilden, seitliche Anschlagflächen 5a. Wie aus Figur 2 ersichtlich, bildet die Lasche 5 weiterhin an ihrer von der Verzahnung 3 abgewandten Ende eine plane axiale Anschlagfläche 5b.

Eine weitere alternative Ausgestaltung einer Lasche ist in Figur 4 dargestellt. Die Lasche 7 ist mit eine in Richtung der Verzahnung 3 weisenden rechtwinkeligen Abkantung 7a versehen und bildet außerdem an ihrer von der Verzahnung abgewandten Seite eine axiale Anschlagfläche 7b.

### Bezugszeichen

- 1: äußerer Synchronring
- 2: Ringkörper
- 2a: erster Endabschnitt
- 2b: zweiter Endabschnitt
- 3: Verzahnung
- 4: Mitnehmernase
- 5: Lasche
- 5a: seitliche Anschlagfläche
- 5b: axiale Anschlagfläche
- 7: Lasche
- 7a: rechtwinkelige Abkantung
- 7b: axiale Anschlagfläche

## Patentansprüche

1. Synchronring *(1)* einer Synchronisiereinrichtung, gebildet aus einem Ringkörper *(2),* einer Verzahnung *(3)* und mindestens einem Anschlag, wobei
- der Ringkörper *(2)* aus Blech gefertigt und konisch ausgebildet ist,
- der Ringkörper *(2)* durch einen ersten Endabschnitt *(2a)* sowie einen zweiten Endabschnitt *(2b)* begrenzt ist und an dem ersten Endabschnitt *(2a)* der größte Konusdurchmesser des konisch ausgebildeten Ringkörpers *(2)* sowie an dem zweiten Endabschnitt *(26)* der kleinste Konusdurchmesser des konisch ausgebildeten Ringkörpers *(2)* ausgebildet ist,
- der Ringkörper *(2)* an seiner Innenmantelfläche eine Reibfläche aufweist,
- die Verzahnung *(3)* sich an den ersten Endabschnitt *(2a)* des Ringkörpers *(2)* anschließt sowie über die Außenmantelfläche des Ringkörpers (2) hervorsteht und
- der Anschlag einstückig mit dem Ringkörper *(2)* ausgebildet sowie an der Außenmantelfläche des Ringkörpers *(2)* angeordnet ist,
- der Anschlag an dem zweiten Endabschnitt (2b) des Ringkörpers (2) von dem Ringkörper (2) radial außen über die Kontur der Außenmantelfläche des Ringkörpers hervorsteht,
- der Anschlag durch eine an dem zweiten Endabschnitt (2b) des Ringkörpers (2) von dem Ringkörper (2) nach außen abgewinkelte Lasche (5, 6, 7) gebildet wird, **dadurch gekennzeichnet dass** der Synchronring nach innen gerichtete Mitnehmernasen aufweist.

2. Synchronring nach Anspruch 1, **dadurch gekennzeichnet, dass** die Lasche (7) an ihrem freien Ende eine in Richtung der Verzahnung (3) weisende Abkantung (7a) aufwest.

3. Synchronring nach Anspruch 1, **dadurch gekennzeichnet, dass** die Lasche (5, 7) an ihrer von der Verzahnung (3) abgewandten Seite eine ebene axiale Anschlagfläche (5b, 7b) bildet, die
- senkrecht zur Längsmittelachse des Synchronringes (1) verläuft,
- und die sich, ausgehend von der die Stirnfläche des Ringkörpers (2) berührenden Randzone der Innenmantelfläche, nach außen erstreckt.

## Claims

1. Synchronizer ring (1) of a synchronizing device, formed from an annular body (2), a toothing (3) and at least one stop,
- the annular body (2) being manufactured from sheet metal and being designed conically,
- the annular body (2) being delimited by a first end portion (2a) and a second end portion (2b), and the largest cone diameter of the conically designed annular body (2) being formed on the first end portion (2a) and the smallest cone diameter of the conically designed annular body (2) being formed on the second end portion (2b),
- the annular body (2) having a frictional surface on its inner surface area,
- the toothing (3) adjoining the first end portion (2a) of the annular body (2) and projecting beyond the outer surface area of the annular body (2),
- the stop being produced in one piece with the annular body (2) and being arranged on the outer surface area of the annular body (2),
- the stop on the second end portion (2b) of the annular body (2) projecting radially outwards beyond the contour of the outer surface area of the annular body, and
- the stop being formed by a tab (5, 6, 7) angled outwards from the annular body (2) on the second end portion (2b) of the annular body (2),
**characterized in that** the synchronizer ring comprises inwards oriented entraining lugs.

2. Synchronizer ring according to claim 1, **characterized in that** the tab (7) has at its free end a bend (7a) pointing in the direction of the toothing (3).

3. Synchronizer ring according to claim 1, **characterized in that** the tab (5, 7) forms, on its side facing away from the toothing (3), a plane axial stop surface (5b, 7b)
- which runs perpendicularly to the longitudinal mid-axis of the synchronizer ring (1),
- and which, starting from that edge zone of the inner surface area which touches the end face of the annular body (2) extends outwards.

## Revendications

1. Bague de synchronisation (1) d'un dispositif de synchronisation, formée d'un corps de bague (2), d'une denture (3) et d'au moins une butée,
- le corps de bague (2) étant fabriqué à partir d'une tôle et conformé en cône,
- le corps de bague (2) étant délimité par une première partie d'extrémité (2a) ainsi que par une deuxième partie d'extrémité (2b), le plus grand diamètre de cône du corps de bague (2) conformé en cône étant configuré sur la première parte d'extrémité (2a) et le plus petit diamètre de cône du corps de bague (2) conformé en cône étant configuré sur la deuxième partie d'extrémité (2b),
- le corps de bague (2) présentant sur sa surface latérale intérieure une surface de friction,
- la denture (3) étant contiguë à la première partie d'extrémité (2a) du corps de bague (2) et saillante au-delà de la surface latérale extérieure du corps de bague (2),
- la butée étant conformée d'une seule pièce avec le corps de bague (2) et disposée sur la surface latérale extérieure du corps de bague (2),
- la butée sur la deuxième partie d'extrémité (2b) du corps de bague (2) s'étendant radialement vers l'extérieur au-delà du contour de la surface latérale extérieure du corps de bague, et
- la butée étant formée par une patte (5, 6, 7) pliée vers l'extérieur à partir du corps de bague (2) sur la deuxième partie d'extrémité (2b) du corps de bague (2),
**caractérisée en ce que** la bague de synchronisation comprend des talons d'entraînement orientés vers l'intérieur.

2. Bague de synchronisation selon la revendication 1, **caractérisée en ce que** la patte (7) présente à son extrémité libre un pli (7a) orienté vers la denture (3).

3. Bague de synchronisation selon la revendication 1, **caractérisée en ce que** la patte (5, 7) forme sur sa face tournée du côté opposé à la denture (3) une surface de butée axiale plane (5b, 7b) qui
- s'étend perpendiculairement à l'axe central longitudinal de la bague de synchronisation (1),
- et qui s'étend depuis la zone de bord de la surface latérale intérieure touchant la surface frontale du corps de bague (2), vers l'extérieur.
